# FASCICULE DE BREVET EUROPEEN

(11) **EP 3 152 791 B1**
(45) Date de publication et mention de la délivrance du brevet: **25.07.2018**
(21) Numéro de dépôt: 15727705.4
(22) Date de dépôt: 27.05.2015
(51) Int. Cl.: H01M 2/10, H01M 2/30, H01M 2/20, H01M 10/42

(54) **DISPOSITIF DE CONNEXION POUR BATTERIE**
VERBINDUNGSVORRICHTUNG FÜR EINE BATTERIE
CONNECTION DEVICE FOR A BATTERY

(30) Priorité: 03.06.2014 FR 1455011
(43) Date de publication de la demande: 12.04.2017
(73) Titulaire: Commissariat à l'Energie Atomique et aux Energies Alternatives, 75015 Paris (FR); Zodiac Aero Electric, 93100 Montreuil (FR)
(72) Inventeur: DE PAOLI, Lionel, 69460 Odenas (FR); BONNEFOUS, Edouard, 93100 Montreuil (FR); DAUCHY, Julien, 73000 Chambery (FR); DESHAYES, Olivier, 93100 Montreuil (FR)
(74) Mandataire: Cabinet Beaumont
(86) Numéro de dépôt international: PCT/FR2015/051402
(87) Numéro de publication internationale: WO 2015/185827

(56) Documents cités:
- WO-A1-00/79619
- WO-A2-03/065483
- US-A1- 2007 184 339

## Description

La présente demande de brevet revendique la priorité de la demande de brevet français FR12/55011.

### Domaine

La présente description concerne un dispositif de connexion électrique pour une batterie, c'est-à-dire un ensemble d'éléments de stockage d'énergie, également appelés accumulateurs, connectés en série et/ou en parallèle.

### Exposé de l'art antérieur

Le montage en série et/ou en parallèle des accumulateurs d'une batterie permet d'atteindre les niveaux souhaités de tension et de puissance électrique. Des circuits électroniques peuvent être connectés aux accumulateurs. Le système comprenant la batterie d'accumulateurs et les circuits électroniques est appelé généralement ensemble-batterie ou pack batterie.

Un ensemble-batterie est généralement divisé en modules, chaque module comprenant un groupe d'accumulateurs connectés en parallèle et/ou en série. Les modules sont connectés les uns aux autres en série et/ou en parallèle. Le nombre d'accumulateurs par module est choisi notamment de façon à limiter la tension aux bornes de chaque module, par exemple à une tension continue inférieure à 120 V, et de façon à limiter l'encombrement de chaque module. La manipulation des modules peut alors être réalisée facilement par un opérateur sans danger.

De façon connue, les liaisons électriques entre accumulateurs d'un module peuvent être réalisées en utilisant des pièces métalliques dédiées, des câbles électriques ou en utilisant les pistes conductrices de circuits imprimés fixés aux accumulateurs. Les liaisons électriques entre modules d'une batterie sont généralement réalisées en utilisant des bandes métalliques ou des câbles électriques, fixés par exemple par vissage, rivetage ou soudure. US2007184339 décrit un ensemble-batterie avec des modules amovibles. Le nombre total d'accumulateurs d'une batterie peut varier dans des proportions importantes en fonction de l'utilisation prévue de la batterie. En particulier, une batterie de véhicule électrique peut comprendre plusieurs milliers d'accumulateurs. De ce fait, le nombre de modules au sein de la batterie peut varier de façon importante.

Il peut être souhaitable de pouvoir extraire un module d'une batterie notamment pour des opérations de maintenance. Ceci ne peut généralement pas être réalisé de façon simple et rapide avec des dispositifs connus de connexion de modules. En effet, soit les pièces métalliques de connexion ou les câbles électriques sont fixés aux modules par des liaisons indémontables, notamment par soudure, soit le nombre de pièces à monter et à démonter est élevé.

L'assemblage des modules par des câbles électriques présente, en outre, l'inconvénient d'être sensible aux vibrations. Il existe alors un risque de court-circuit dans le cas de rupture d'un câble électrique ou dans le cas de détérioration de l'isolant du câble.

La connexion entre modules peut être réalisée en utilisant des connecteurs de puissance. Toutefois, les connecteurs de puissance existants sont généralement conçus pour concentrer sur une liaison électrique de volume minimal l'intégralité du courant à transmettre. Il peut alors être difficile d'obtenir une répartition homogène du courant entre les accumulateurs d'un module, ce qui peut détériorer la durée de vie et des performances des accumulateurs.

En outre, les dispositifs de connexion des modules les uns aux autres doivent permettre la réalisation d'opérations de montage et de démontage sans danger par un opérateur. En effet, les opérations de maintenance peuvent être réalisées sous tension lorsqu'il n'est pas souhaitable de décharger complètement les accumulateurs, notamment pour des accumulateurs de type lithium.

### Résumé

Un mode de réalisation vise à pallier tout ou partie des inconvénients liés à l'utilisation des dispositifs de connexion connus de modules d'une batterie.

Un mode de réalisation vise à réduire l'encombrement de la batterie.

Un mode de réalisation vise à homogénéiser le courant entre les accumulateurs de chaque module de la batterie.

Un mode de réalisation vise un procédé de montage et de démontage des modules d'une batterie qui est simple et rapide.

Un mode de réalisation vise à assurer que les opérations de montage et de démontage sont sans danger pour un opérateur.

Ainsi, un mode de réalisation prévoit un ensemble-batterie comprenant :
une première pluralité d'accumulateurs répartis en rangées ;
un premier support disposé le long d'une première rangée d'accumulateurs de la première pluralité d'accumulateurs ;
des premières bandes conductrices fixées aux accumulateurs de la première rangée et s'étendant sur le premier support ;
un premier guide, le premier support étant adapté à coulisser dans le premier guide ;
une première bande métallique s'étendant dans le premier guide ;
des premiers connecteurs électriques déformables fixés à la première bande métallique et adaptés à venir au contact des premières bandes conductrices lorsque le premier support est complètement inséré dans le premier guide ; et
des premières portions métalliques réparties le long de la première bande métallique et au contact de la première bande métallique.

Selon un mode de réalisation, pour chaque première bande conductrice, la résistance électrique entre cette première bande conductrice et la première portion métallique la plus proche est sensiblement identique.

Selon un mode de réalisation, pour chaque première bande conductrice, la résistance électrique entre cette première bande conductrice et la première portion métallique la plus proche est identique à 10 % près.

Selon un mode de réalisation, les premiers connecteurs électriques déformables comprennent des connecteurs électriques à lames multiples.

Selon un mode de réalisation, le premier guide comprend des premières ouvertures pour le passage des premières portions.

Selon un mode de réalisation, l'ensemble-batterie comprend une plaque se prolongeant par les premières portions.

Selon un mode de réalisation, l'ensemble-batterie comprend, en outre :
des deuxièmes bandes conductrices fixées aux accumulateurs d'une deuxième rangée d'accumulateurs de la première pluralité d'accumulateurs ;
une deuxième bande métallique ;
des deuxièmes connecteurs électriques déformables fixés à la deuxième bande métallique et adaptés à venir au contact des deuxièmes bandes conductrices.

Selon un mode de réalisation, l'ensemble-batterie comprend, en outre :
un deuxième support disposé le long de la deuxième rangée d'accumulateurs, les deuxièmes bandes conductrices s'étendant sur le deuxième support ;
un deuxième guide, le deuxième support étant adapté à coulisser dans le deuxième guide, la deuxième bande métallique s'étendant dans le deuxième guide, les deuxièmes connecteurs électriques déformables étant adaptés à venir au contact des deuxièmes bandes conductrices lorsque le deuxième support est complètement inséré dans le deuxième guide ; et
des deuxièmes portions métalliques réparties le long de la deuxième bande métallique et au contact de la deuxième bande métallique.

Selon un mode de réalisation, le premier support comprend des première et deuxième faces opposées, la première rangée d'accumulateurs étant disposée sur la première face et la deuxième rangée d'accumulateurs étant disposée sur la deuxième face, les premières bandes conductrices s'étendant sur la première face et les deuxièmes bandes conductrices s'étendant sur la deuxième face, la deuxième bande métallique s'étendant dans le premier guide, les deuxièmes connecteurs électriques déformables étant adaptés à venir au contact des deuxièmes bandes conductrices lorsque le premier support est complètement inséré dans le premier guide, chaque première portion métallique comprenant une première couche métallique au contact de la première bande métallique et une deuxième couche métallique au contact de la deuxième bande métallique.

Selon un mode de réalisation, l'ensemble-batterie comprend, en outre :
une deuxième pluralité d'accumulateurs répartis en rangées ;
un troisième support disposé le long d'une troisième rangée d'accumulateurs de la deuxième pluralité d'accumulateurs ;
des troisièmes bandes conductrices fixées aux accumulateurs de la troisième rangée et s'étendant sur le troisième support ;
un troisième guide, le troisième support étant adapté à coulisser dans le troisième guide ;
une troisième bande métallique s'étendant dans le troisième guide ;
des troisièmes connecteurs électriques déformables fixés à la troisième bande métallique et adaptés à venir au contact des troisièmes bandes conductrices lorsque le troisième support est complètement inséré dans le troisième guide ; et
des troisièmes portions métalliques réparties le long de la troisième bande métallique et au contact de la troisième bande métallique.

Selon un mode de réalisation, les premières portions métalliques sont reliées aux troisièmes portions métalliques de façon que la résistance entre chaque accumulateur de la première rangée et l'accumulateur de même rang de la troisième rangée soit identique à 10 % près.

Selon un mode de réalisation, l'ensemble-batterie comprend, en outre :
un quatrième support disposé le long d'une quatrième rangée d'accumulateurs de la deuxième pluralité d'accumulateurs ;
des quatrièmes bandes conductrices fixées aux accumulateurs de la quatrième rangée et s'étendant sur le quatrième support ;
un quatrième guide, le quatrième support étant adapté à coulisser dans le quatrième guide ;
une quatrième bande métallique s'étendant dans le quatrième guide ;
des quatrièmes connecteurs électriques déformables fixés à la quatrième bande métallique et adaptés à venir au contact des quatrièmes bandes conductrices lorsque le quatrième support est complètement inséré dans le quatrième guide ; et
des quatrièmes portions métalliques réparties le long de la quatrième bande métallique et au contact de la quatrième bande métallique.

Selon un mode de réalisation, les deuxièmes portions sont reliées aux quatrièmes portions de façon que la résistance entre chaque accumulateur de la deuxième rangée et l'accumulateur de même rang de la quatrième rangée soit identique à 10 % près.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un schéma électrique équivalent d'un module d'un ensemble-batterie ;
la figure 2 est une vue en perspective, partielle et schématique, d'un mode de réalisation d'un module d'un ensemble-batterie ;
la figure 3 représente une vue en perspective, partielle et schématique, d'un ensemble-batterie comprenant le module de la figure 1 et un mode de réalisation d'un dispositif de connexion de module ;
la figure 4 est une vue de côté, partielle et schématique, de l'ensemble-batterie représenté en figure 3 ;
la figure 5 est une vue en perspective, partielle et schématique, d'un guide du dispositif de connexion de l'ensemble-batterie représenté en figure 5 ;
les figures 6 et 7 sont respectivement une vue en perspective et une vue de côté, partielles et schématiques, d'un connecteur à lamelles du dispositif de connexion représenté en figure 5 ;
la figure 8 est une coupe, partielle et schématique, d'un autre mode de réalisation d'un ensemble-batterie ;
les figures 9 et 10 sont des vues de face, partielles et schématiques, de modes de réalisation d'un élément de connexion pouvant être utilisé pour réaliser l'ensemble-batterie représenté en figure 8 ;
la figure 11 est une vue en perspective d'un autre mode de réalisation d'un ensemble-batterie ;
la figure 12 est une vue analogue à la figure 4 d'un ensemble-batterie et d'un autre mode de réalisation d'un dispositif de connexion de module ;
la figure 13 est une vue analogue à la figure 5 d'un guide du dispositif de connexion de l'ensemble-batterie représenté en figure 12 ;
les figures 14 et 15 sont respectivement une vue en perspective et une vue en coupe d'un élément du dispositif de connexion de la figure 12 ; et
la figure 16 est une vue en coupe, partielle et schématique, d'une variante du dispositif de connexion de la figure 12.

### Description détaillée

De mêmes éléments ont été désignés par de mêmes références aux différentes figures qui ont été tracées sans respect d'échelle. De plus, seuls les étapes et éléments utiles à la compréhension des modes de réalisation décrits sont représentés et détaillés. En particulier, la constitution des accumulateurs n'a pas été illustrée, les modes de réalisation étant compatibles avec les accumulateurs usuels. De plus, la réalisation des circuits électroniques connectés aux accumulateurs n'a pas non plus été détaillée, les modes de réalisation décrits étant là encore compatibles avec les circuits électroniques usuels destinés à des ensembles-batteries. En outre, on fait référence à des positions (supérieure, inférieure, latérale, etc.) en se basant de façon arbitraire sur l'orientation des figures. Dans la suite de la description, lorsqu'une première pièce est dite fixée à une deuxième pièce, cela signifie qu'il y a une liaison rigide entre la première pièce et la deuxième pièce, la première pièce pouvant être au contact direct de la deuxième pièce ou pouvant être reliée à la deuxième pièce par une troisième pièce interposée entre la première pièce et la deuxième pièce.

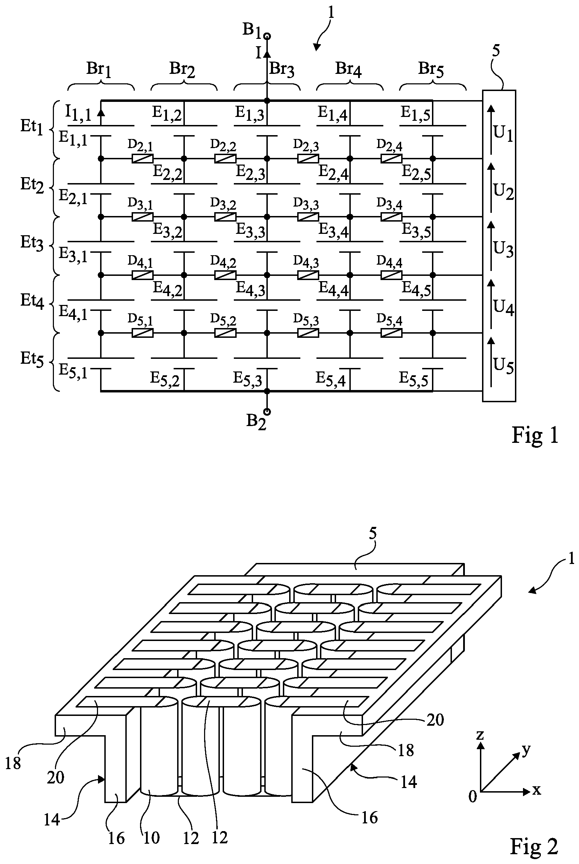

La figure 1 représente un schéma électrique équivalent d'un module 1 d'un ensemble-batterie. Un ensemble-batterie peut comprendre plusieurs modules 1 connectés les uns aux autres en série et/ou en parallèle.

Le module 1 comprend M*N accumulateurs E_{i,j} répartis selon M étages, ou rangées, Etᵢ et N branches Brj, où i est un nombre entier qui varie de 1 à M et j est un nombre entier qui varie de 1 à N. Dans le présent exemple, M et N sont égaux à 5. Il peut s'agir d'accumulateurs du type lithium-ion. Les accumulateurs d'une même branche sont connectés en série, la borne négative de l'accumulateur E_{i,j} étant connectée à la borne positive de l'accumulateur E_{i+1,j}. Le module 1 comprend, en outre, au moins un circuit électronique 5 qui peut être connecté aux accumulateurs E_{i,j} notamment pour en surveiller le bon fonctionnement. A titre d'exemple, le circuit électronique 5 peut être adapté à mesurer la tension Uᵢ aux bornes des accumulateurs d'un même étage Etᵢ.

Des disjoncteurs D_{i,j} pour i variant entre 2 et M et j variant entre 1 et N-1, peuvent être prévus entre les accumulateurs. A titre d'exemple, chaque disjoncteur D_{i,j} est connecté entre un noeud commun aux accumulateurs E_{i,j} et E_{i+1,j} et un noeud commun aux accumulateurs E_{i,j+1} et E_{i+1,j+1}. Toutefois, la disposition des disjoncteurs D_{i,j} peut être différente de celle représentée en figure 1.

En fonctionnement, les bornes positives des accumulateurs de l'étage Et₁ sont connectées entre elles et forment une première borne B₁ du module et les bornes négatives des accumulateurs de l'étage Et_{N} sont connectées entre elles et forment une deuxième borne B₂ du module.

La figure 2 représente une vue en perspective d'un mode de réalisation du module 1 d'un ensemble-batterie correspondant au schéma électrique représenté en figure 1 avec M égal à 4 et N égal à 7. En figure 2, les accumulateurs sont représentés par des éléments cylindriques 10 pouvant avoir un diamètre variant de quelques millimètres à plusieurs centimètres et une hauteur variant de quelques millimètres à plusieurs dizaines de centimètres. En outre, les disjoncteurs D_{i,j} et les éléments de liaison entre la carte électronique 5 et les accumulateurs 10 ne sont pas représentés en figure 2. A titre d'exemple, les branches s'étendent selon une direction (Ox), les étages s'étendent selon la direction (Oy) et l'axe de chaque accumulateur 10 est orienté selon une direction (Oz). A titre d'exemple, la direction (Oz) est verticale et le plan (Oxy) est un plan horizontal. A titre de variante, la direction (Oz) est horizontale et le plan (Oxy) est un plan vertical.

Dans le présent mode de réalisation, les connexions entre les accumulateurs 10 sont réalisées par des pièces de connexion métalliques correspondant, par exemple, à des bandes métalliques 12. Les bandes métalliques 12 peuvent être fixées aux accumulateurs 10, par exemple, par vissage, rivetage ou soudure. Les accumulateurs 10 du module sont maintenus entre deux supports 14. Chaque support 14 a, par exemple, une section dans un plan parallèle au plan (Oxz) en forme de L et comprend une portion de maintien 16 et une portion coulissante 18 sensiblement à angle droit. La portion de maintien 16 s'étend sensiblement parallèlement au plan (Oyz) le long d'un étage d'accumulateurs 10 et la portion coulissante 18 s'étend sensiblement parallèlement au plan (Oxy). Chaque support 14 peut correspondre à une pièce monobloc constituée d'un matériau diélectrique, par exemple du polyétheréthercétone (PEEK).

Des bandes conductrices 20, par exemple métalliques, relient les accumulateurs 10 du premier ou du dernier étage du module 1 au support 14 adjacent. Chaque bande conductrice 20 est fixée à une borne d'un accumulateur et à la portion coulissante 18 du support adjacent. A titre d'exemple, chaque bande conductrice 20 est réalisée en un matériau avec un contact résistif faible, une résistance élevée à la corrosion et une bonne conductivité, par exemple de l'acier.

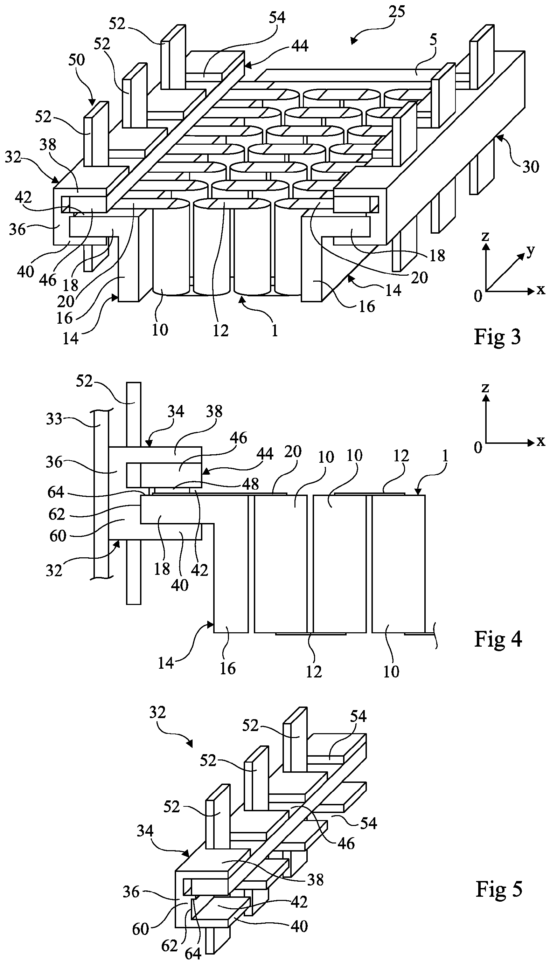

La figure 3 représente un mode de réalisation d'un ensemble-batterie 25 comprenant le module 1 représenté en figure 2 et un mode de réalisation du dispositif de connexion 30 du module 1 et la figure 4 est une vue de côté, selon la direction (Oy), et en coupe partielle d'une partie de l'ensemble-batterie 25 de la figure 3.

Le dispositif de connexion 30 comprend deux éléments de guidage et de connexion 32 s'étendant chacun parallèlement à la direction (Oy). Les éléments de guidage et de connexion 32 sont fixés à une armature de support 33 de l'ensemble-batterie 25, non représentée en figure 3 et représentée de façon schématique en figure 4.

En fonctionnement, chaque élément de guidage et de connexion 32 est destiné à coopérer avec la portion coulissante 18 de l'un des supports 14. Chaque élément de guidage et de connexion 32 comprend un guide 34 pouvant correspondre à une structure monobloc ou comprendre plusieurs pièces fixées les unes aux autres. A titre d'exemple, chaque guide 34 est réalisé, par exemple, en polyétheréthercétone (PEEK). Le guide 34 comprend un fond 36 et deux portions latérales 38, 40 qui délimitent une gorge 42 s'étendant selon la direction (Oy).

La figure 5 est une vue en perspective de l'un des guides 32. Le guide 34 comprend une pièce de connexion électrique 44 comportant une bande métallique 46 qui s'étend parallèlement à la direction (Oy) sur toute la longueur du guide 32. La bande métallique 46 est située dans la gorge 42 et est fixée à la portion latérale 38. De préférence, la bande 46 est en un matériau avec un contact résistif faible, une résistance élevée à la corrosion et une bonne conductivité, par exemple du cuivre argenté, du laiton argenté, de l'aluminium recuit argenté ou du cuivre nickelé. L'épaisseur de la bande 46 peut varier de quelques micromètres à plusieurs millimètres. La pièce de connexion électrique 44 comprend, en outre, des connecteurs électriques souples 48, visibles en figure 4, fixés à la bande métallique 46. Il s'agit, par exemple, de connecteurs électriques à lames multiples. Les connecteurs 48 viennent au contact des bandes conductrices 20 lorsque le module 1 est complètement inséré dans les éléments de guidage et de connexion 32. A titre d'exemple, les connecteurs à lames multiples 48 peuvent être répartis sur la totalité de la longueur de la bande métallique 46 selon la direction (Oy). A titre de variante, les connecteurs à lames multiples 48 peuvent être seulement prévus aux emplacements des bandes conductrices 20 lorsque le module 1 est complètement inséré dans les éléments de guidage et de connexion 32.

La pièce de connexion électrique 44 comprend, en outre, un élément de connexion 50 qui, dans le présent mode de réalisation, comprend des portions métalliques 52, ayant par exemple la forme de bandes s'étendant chacune parallèlement à la direction (Oz) et qui sont en contact électrique avec la bande métallique 46. Le guide 32 comprend des ouvertures 54 pour le passage des portions métalliques 52. A titre d'exemple, chaque portion métallique 52 est en un matériau avec un contact résistif faible, une haute résistance à la corrosion et une bonne conductivité, par exemple du cuivre argenté, du laiton argenté, de l'aluminium recuit argenté ou du cuivre nickelé. L'épaisseur de chaque portion métallique 52 peut varier de quelques micromètres à plusieurs millimètres. Le guide 32 comprend des ouvertures 54 prévues dans les portions latérales 38, 40 pour le passage des portions métalliques 52. Les portions métalliques 52 sont fixées au fond 36 du guide 32, par exemple par vissage. Les portions métalliques 52 peuvent se projeter de part et d'autre du guide 32. Les portions métalliques 52 permettent de relier électriquement l'ensemble-batterie 25 à un autre ensemble-batterie ou à un connecteur de puissance formant une borne de l'ensemble-batterie 25. De préférence, les portions métalliques 52 sont régulièrement réparties le long de la bande métallique 46. Le nombre de portions métalliques 52 connectées à une bande conductrice 20 est inférieur ou égal au nombre N de bandes conductrices 20 connectées aux accumulateurs 10 du premier ou dernier étage du module 1. Selon un mode de réalisation, le nombre de portions métalliques 52 est inférieur ou égal à N/2. De préférence, le nombre de portions métalliques 52 est supérieur ou égal à N/4.

Selon le présent mode de réalisation, le guide 32 comprend dans la gorge 42 des éléments en saillie 60 depuis le fond 36. Chaque élément en saillie 60 délimite deux faces 62, 64 qui forment des butées. La face 62 est parallèle au plan (Oyz) et la face 64 est parallèle au plan (Oxy). Les faces 62 des deux guides 34 forment des butées pour le module 1 lors d'un déplacement du module 1 selon la direction (Ox). La face 64 est parallèle à la direction (Oy) et permet de protéger les connecteurs à lames multiples 48 contre un écrasement par les supports 14. Les éléments en saillie 60 peuvent être présents sur toute la longueur, mesurée selon la direction (Oy), de l'élément de guidage et de connexion 32 avec interruption au niveau des ouvertures 54 pour le passage des portions métalliques 52.

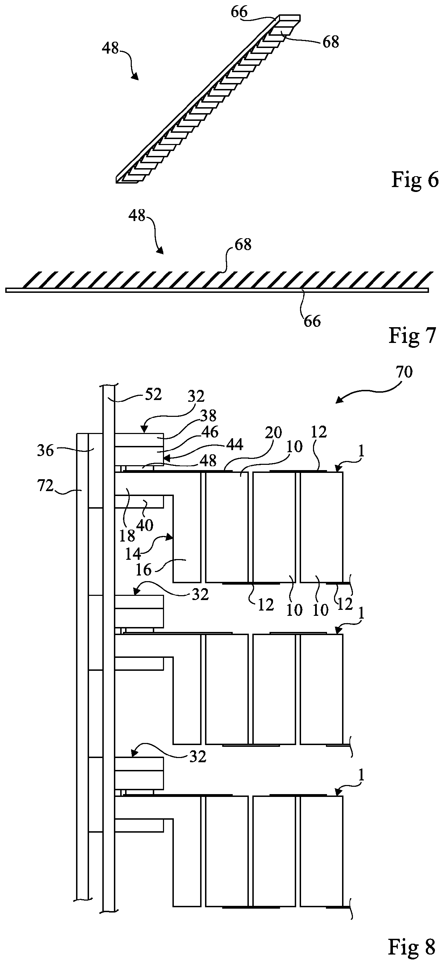

Les figures 6 et 7 représentent un mode de réalisation d'un connecteur à lames multiples 48. Le connecteur comprend une base métallique 66 sur laquelle sont fixées des lames 68 déformables. La base 66 peut être confondue avec la bande métallique 46 ou être rapportée sur la bande métallique 46. Les lames 68 peuvent être inclinées par rapport à la base 66. A titre d'exemple, le nombre de lames par centimètre de connecteur 48 varie de 1 à 10. Les lames 68 peuvent être fixées à la base 66, par exemple par rivetage ou vissage ou en prévoyant une gorge dans la base dans laquelle est logée une portion de forme complémentaire de la lame.

Le courant est transmis aux accumulateurs 10 du premier ou dernier étage du module 1 par l'intermédiaire des portions métalliques 52, de la bande métallique 46, des connecteurs à lames multiples 48 et des bandes conductrices 20. De façon avantageuse, la résistance électrique entre chaque bande conductrice 20 et la portion métallique 52 la plus proche est sensiblement identique, c'est-à-dire identique à 25 % près. De préférence, la résistance électrique entre chaque bande conductrice 20 et la portion métallique 52 la plus proche est identique à 10 % près. Ceci permet d'obtenir une répartition sensiblement homogène du courant passant par les portions métallique 52 entre les accumulateurs 10.

Le nombre de portions métalliques 52 peut être plus important que ce qui aurait été suffisant par rapport au niveau de puissance électrique à transmettre. Toutefois, le fait de prévoir un nombre suffisamment important de portions métalliques 52 et de les répartir, de préférence de façon sensiblement régulière, le long de la bande métallique 46 permet d'obtenir sensiblement les mêmes résistances électriques entre les bandes conductrices 20 et les portions métalliques 52 associées, et donc une répartition sensiblement homogène du courant entre les accumulateurs 10 du premier ou dernier étage du module 1.

Selon un mode de réalisation d'un procédé de montage de l'ensemble-batterie, le module 1 est inséré dans les rainures 42 des éléments de guidage et de connexion 32 depuis une extrémité des éléments de guidage et est poussé jusqu'à l'extrémité opposée des éléments de guidage et de connexion 32. Les lames des connecteurs à lames multiples 48 sont alors comprimées par les bandes conductrices 20 du module 1. Ceci permet d'obtenir une connexion électrique de bonne qualité entre les bandes conductrices 20 et les connecteurs à lames multiples 48. Selon un mode de réalisation d'un procédé de démontage de l'ensemble-batterie, on fait coulisser le module 1 dans les rainures 42 des éléments de guidage et de connexion 32 jusqu'à être retiré en totalité des éléments de guidage et de connexion 32. Les opérations de montage et de démontage de l'ensemble-batterie peuvent donc être réalisées de façon simple et rapide.

Des moyens peuvent être prévus sur le module 1 et/ou les éléments de guidage et de connexion 32 pour qu'un opérateur oriente de façon convenable le module 1 par rapport aux éléments de guidage et de connexion 32.

En outre, des moyens peuvent être prévus pour permettre la connexion automatique de la carte électronique 5 à un module de traitement lorsque le module 1 est inséré en totalité dans les éléments de guidage et de connexion 32.

En outre, la connexion électrique entre les connecteurs à lames multiples 48 et les bandes conductrices 20 est réalisée de façon automatique par l'insertion du module 1 dans les guides 32. Un opérateur n'a donc pas à manipuler des pièces métalliques sous tension lors des opérations de montage et de démontage de l'ensemble-batterie. Ces opérations de montage et de démontage peuvent donc être réalisées sans danger. De plus, l'utilisation de connecteurs à lames multiples 48 permet la transmission de courant de façon homogène sur toute la largeur de chaque bande conductrice 20.

La figure 8 représente, de façon partielle et schématique, un autre mode de réalisation d'un ensemble-batterie 70 dans lequel trois modules 1, représentés partiellement, sont connectés en parallèle. Le plan de coupe de la figure 8 est un plan parallèle au plan (Oxz) et passant par l'une des portions métalliques 52. En figure 8, on a représenté trois éléments de guidage et de connexion 32 montés sur une armature 72. Dans ce mode de réalisation, les portions métalliques 52 sont communes aux trois éléments de guidage et de connexion 50.

L'ensemble-batterie 70 permet de relier électriquement les accumulateurs de la première ou dernière rangée d'un premier module avec les accumulateurs de la première ou dernière rangée d'un deuxième module. De façon avantageuse, la résistance électrique entre chaque accumulateur de la première ou dernière rangée du premier module et l'accumulateur à la même position (au même rang) dans la première ou dernière rangée du deuxième module est identique à 10 % près. Ceci permet d'obtenir une répartition sensiblement homogène du courant entre les accumulateurs 10 des rangées d'extrémité des premier et deuxième modules.

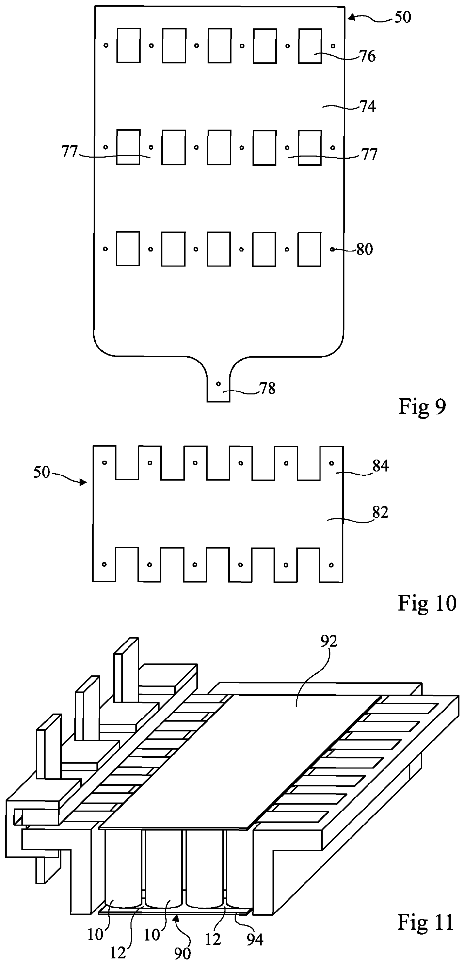

La figure 9 représente un autre mode de réalisation de l'élément de connexion 50 dans lequel l'élément de connexion 50 comprend une plaque 74 traversée par plusieurs rangées d'ouvertures 76. Chaque rangée d'ouvertures 76 est associée à un module 1. Les ouvertures 76 d'une même rangée sont délimitées latéralement par des portions 77 de la plaque 74, deux ouvertures 76 adjacentes étant notamment séparées par une portion 77 de la plaque 74. Les ouvertures 76 permettent le passage de l'un des éléments de guidage 32 associés à un module, la bande métallique 46 venant alors au contact des portions 77 de la plaque 74. Dans le mode de réalisation représenté en figure 9, la plaque 74 se prolonge à une extrémité par un connecteur 78 destiné à former une borne de l'ensemble-batterie. Des trous 80 pour le passage de vis peuvent être prévus dans la plaque 74 pour faciliter le montage de la plaque 74 sur les guides 32.

La figure 10 représente un autre mode de réalisation d'un élément de connexion 50 adapté à la connexion en série de deux modules 1. L'élément de connexion 50 comprend une portion centrale 82 se prolongeant sur deux côtés par des dents 84, chaque dent 84 étant destinée à être disposée dans l'ouverture 54 de l'un des guides 32 associés au module. Des trous pour le passage de vis peuvent être prévus dans chaque protubérance 84 pour faciliter le montage de l'élément de connexion 50 sur les guides 32.

La figure 11 représente un autre mode de réalisation d'un module 90 dans lequel on a représenté des circuits imprimés 92, 94 recouvrant les accumulateurs 10 du côté de chaque extrémité axiale des accumulateurs 10. Les circuits imprimés 92, 94 sont connectés à chaque accumulateur 10, à certains accumulateurs 10, à chaque pièce de connexion 12 et/ou à certaines pièces de connexion 12. Les circuits imprimés 92, 94 peuvent être connectés à la carte électronique 5. Selon un mode de réalisation, les circuits imprimés 92, 94 correspondent à un circuit imprimé souple unique qui est replié pour recouvrir les deux extrémités axiales de chaque accumulateur 10.

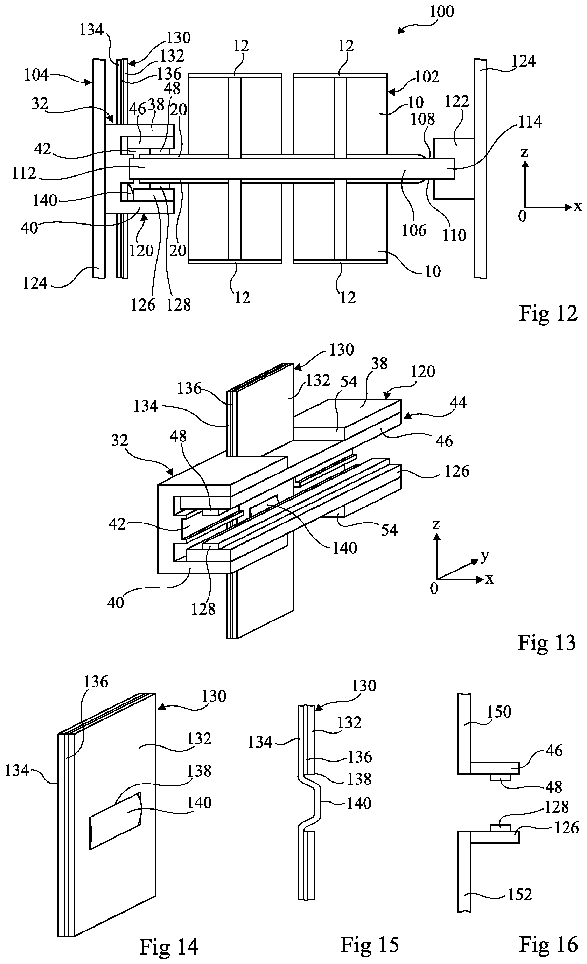

La figure 12 est une vue en perspective, partielle et schématique, d'un ensemble-batterie 100 comprenant un autre mode de réalisation de module 102 d'un ensemble-batterie et un autre mode de réalisation d'un dispositif de connexion de module 104. Les éléments communs avec le mode de réalisation représenté en figure 3 sont désignés par les mêmes références.

Dans ce mode de réalisation, le module 102 d'un ensemble-batterie correspond au schéma électrique représenté en figure 1 avec M égal à 8. Le module 102 comprend un support 106 ayant deux faces opposées 108 et 110 et deux bords latéraux 112, 114 opposés. Les accumulateurs 10 du module 102 sont répartis sur les deux faces 108, 110 de façon que les bandes conductrices 20 soient situées le long d'un même bord latéral 112 du support 106. A titre d'exemple, les bandes conductrices 20 situées sur la face 108 sont connectées aux bornes positives des accumulateurs 10 adjacents et les bandes conductrices 20 situées sur la face 110 sont connectées aux bornes négatives des accumulateurs 10 adjacents. Les accumulateurs 10 du côté de la face 108 adjacents au bord latéral 114 sont connectés, par des bandes métalliques 12 traversant le support 106, aux accumulateurs 10 du côté de la face 110 adjacents au bord latéral 114.

Le dispositif de connexion 104 comprend un élément de guidage et de connexion 120 et un élément de guidage 122 s'étendant chacun parallèlement à la direction (Oy). Les éléments 120 et 122 sont fixés à une armature de support 124.

La figure 13 est une vue en perspective, partielle et schématique, de l'élément de guidage et de connexion 120.

En fonctionnement, l'élément de guidage et de connexion 120 est destiné à coopérer avec un bord latéral 112 du support 106 et l'élément de guidage 122 est destiné à coopérer avec un bord latéral 114 du support 106.

L'élément de guidage et de connexion 120 a la même structure que l'élément de guidage et de connexion 32 décrit précédemment à la différence que la pièce de connexion électrique 44 comprend, en outre, une bande métallique 126, pouvant avoir la même structure que la bande métallique 46, et qui s'étend parallèlement à la direction (Oy) sur toute la longueur du guide 32. La bande métallique 126 est située dans la gorge 42 et est fixée à la portion latérale 40.

La pièce de connexion électrique 44 comprend, en outre, des connecteurs électriques souples 128, fixés à la bande métallique 126, et qui peuvent avoir la même structure que les connecteurs électriques souples 48.

Les connecteurs 48 viennent au contact des bandes conductrices 20 situées sur la face 108 et les connecteurs 128 viennent au contact des bandes conductrices 20 situées sur la face 110 lorsque le module 102 est complètement inséré dans les éléments de guidage 120, 122.

L'élément de connexion 50 comprend des portions métalliques 130, ayant par exemple la forme de bandes s'étendant chacune parallèlement à la direction (Oz). Une seule portion 130 est représentée sur les figures 12 et 13. Les portions métalliques 130 jouent le même rôle que les portions métalliques 52 décrites précédemment.

Les figures 14 et 15 sont respectivement une vue en perspective et une vue en coupe d'un mode de réalisation d'une portion métallique 130. Le plan de coupe de la figure 15 est un plan parallèle au plan (Oxz) passant sensiblement au milieu de la portion métallique 130. Chaque portion métallique 130 comprend deux couches métalliques 132, 134 séparées par une couche isolante 136. Une ouverture 138 est réalisée dans la couche métallique 132 et la couche isolante 136. La couche métallique 134 comprend une zone bombée 140 qui pénètre dans l'ouverture 138 et qui se projette en saillie par rapport à la couche métallique 132.

La couche métallique 132 est en contact électrique avec la bande métallique 46 et la zone bombée 140 est en contact avec la bande métallique 124. De préférence, la surface de contact entre la couche métallique et la bande métallique 46 est sensiblement égale à la surface de contact entre la zone bombée 140 et la bande métallique 124.

Le mode de réalisation de la portion métallique 130 représentée sur les figures 14 et 15 est particulièrement adapté au cas où des modules 102 d'un ensemble-batterie sont connectés en parallèle.

La figure 16 représente une variante dans laquelle la portion métallique 130 est remplacée par deux plaques métalliques 150 et 152. La plaque métallique 150 est au contact de la bande métallique 46 et la plaque métallique 152 est au contact de la bande métallique 126. Cette variante est particulièrement adaptée au cas où des modules 102 d'un ensemble-batterie sont connectés en série. A titre d'exemple, lorsqu'un premier module 102 est disposé entre des deuxième et troisième modules 102, la plaque 152 peut être connectée à la bande métallique 126 du premier module 102 et à la bande métallique 46 du deuxième module 102 et la plaque 150 peut être connectée à la bande métallique 46 du premier module 102 et à la bande métallique 46 du troisième module 102.

Des modes de réalisation particuliers ont été décrits. Diverses variantes et modifications apparaîtront à l'homme de l'art. Bien que dans les modes de réalisation décrits précédemment, le module 1 comprenne deux supports 14 adaptés chacun à coopérer avec un élément de guidage et de connexion 32, les accumulateurs du module peuvent être connectés les uns aux autres de façon qu'un seul support 14 soit prévu le long d'une rangée d'accumulateurs.

## Revendications

1. Ensemble-batterie (25 ; 70) comprenant :
une première pluralité d'accumulateurs (10) répartis en rangées ;
un premier support (14 ; 106) disposé le long d'une première rangée d'accumulateurs de la première pluralité d'accumulateurs ;
des premières bandes conductrices (20) fixées aux accumulateurs de la première rangée et s'étendant sur le premier support ;
un premier guide (34), le premier support étant adapté à coulisser dans le premier guide ;
une première bande métallique (46) s'étendant dans le premier guide ; et **caractérisé en ce que** des premiers connecteurs électriques déformables (48) sont fixés à la première bande métallique et adaptés à venir au contact des premières bandes conductrices lorsque le premier support est complètement inséré dans le premier guide ; et
des premières portions métalliques (52 ; 84 ; 130) sont réparties le long de la première bande métallique et au contact de la première bande métallique.

2. Ensemble-batterie selon la revendication 1, dans lequel, pour chaque première bande conductrice (20), la résistance électrique entre cette première bande conductrice et la première portion métallique (52 ; 84) la plus proche est sensiblement identique.

3. Ensemble-batterie selon la revendication 2, dans lequel, pour chaque première bande conductrice (20), la résistance électrique entre cette première bande conductrice et la première portion métallique (52 ; 84) la plus proche est identique à 10 % près.

4. Ensemble-batterie selon l'une quelconque des revendications 1 à 3, dans lequel les premiers connecteurs électriques déformables (48) comprennent des connecteurs électriques à lames multiples.

5. Ensemble-batterie selon l'une quelconque des revendications 1 à 4, dans lequel le premier guide (34) comprend des premières ouvertures (54) pour le passage des premières portions.

6. Ensemble-batterie selon l'une quelconque des revendications 1 à 5, comprenant une plaque (74 ; 82) se prolongeant par les premières portions (84).

7. Ensemble-batterie selon la revendication 1, comprenant, en outre :
des deuxièmes bandes conductrices (20) fixées aux accumulateurs d'une deuxième rangée d'accumulateurs (10) de la première pluralité d'accumulateurs ;
une deuxième bande métallique (46 ; 126) ;
des deuxièmes connecteurs électriques déformables (48 ; 128) fixés à la deuxième bande métallique et adaptés à venir au contact des deuxièmes bandes conductrices.

8. Ensemble-batterie selon la revendication 7, comprenant, en outre :
un deuxième support (14) disposé le long de la deuxième rangée d'accumulateurs (10), les deuxièmes bandes conductrices (20) s'étendant sur le deuxième support ;
un deuxième guide (34), le deuxième support étant adapté à coulisser dans le deuxième guide, la deuxième bande métallique (46) s'étendant dans le deuxième guide, les deuxièmes connecteurs électriques déformables (48) étant adaptés à venir au contact des deuxièmes bandes conductrices lorsque le deuxième support est complètement inséré dans le deuxième guide ; et
des deuxièmes portions métalliques (52) réparties le long de la deuxième bande métallique et au contact de la deuxième bande métallique.

9. Ensemble-batterie selon la revendication 8, dans lequel le premier support (106) comprend des première et deuxième faces opposées (108, 110), la première rangée d'accumulateurs étant disposée sur la première face (108) et la deuxième rangée d'accumulateurs étant disposée sur la deuxième face, les premières bandes conductrices (20) s'étendant sur la première face et les deuxièmes bandes conductrices (20) s'étendant sur la deuxième face, la deuxième bande métallique (126) s'étendant dans le premier guide (34), les deuxièmes connecteurs électriques déformables (128) étant adaptés à venir au contact des deuxièmes bandes conductrices lorsque le premier support est complètement inséré dans le premier guide, chaque première portion métallique (130) comprenant une première couche métallique (132) au contact de la première bande métallique et une deuxième couche métallique (134) au contact de la deuxième bande métallique.

10. Ensemble-batterie selon l'une quelconque des revendications 1 à 9, comprenant, en outre :
une deuxième pluralité d'accumulateurs répartis en rangées ;
un troisième support disposé le long d'une troisième rangée d'accumulateurs de la deuxième pluralité d'accumulateurs ;
des troisièmes bandes conductrices fixées aux accumulateurs de la troisième rangée et s'étendant sur le troisième support ;
un troisième guide, le troisième support étant adapté à coulisser dans le troisième guide ;
une troisième bande métallique s'étendant dans le troisième guide ;
des troisièmes connecteurs électriques déformables fixés à la troisième bande métallique et adaptés à venir au contact des troisièmes bandes conductrices lorsque le troisième support est complètement inséré dans le troisième guide ; et
des troisièmes portions métalliques réparties le long de la troisième bande métallique et au contact de la troisième bande métallique.

11. Ensemble-batterie selon la revendication 10, dans lequel les premières portions métalliques sont reliées aux troisièmes portions métalliques de façon que la résistance entre chaque accumulateur de la première rangée et l'accumulateur de même rang de la troisième rangée soit identique à 10 % près.

12. Ensemble-batterie selon l'une quelconque des revendications 1 à 11, comprenant, en outre :
un quatrième support disposé le long d'une quatrième rangée d'accumulateurs de la deuxième pluralité d'accumulateurs ;
des quatrièmes bandes conductrices fixées aux accumulateurs de la quatrième rangée et s'étendant sur le quatrième support ;
un quatrième guide, le quatrième support étant adapté à coulisser dans le quatrième guide ;
une quatrième bande métallique s'étendant dans le quatrième guide ;
des quatrièmes connecteurs électriques déformables fixés à la quatrième bande métallique et adaptés à venir au contact des quatrièmes bandes conductrices lorsque le quatrième support est complètement inséré dans le quatrième guide ; et
des quatrièmes portions métalliques réparties le long de la quatrième bande métallique et au contact de la quatrième bande métallique.

13. Ensemble-batterie selon les revendications 11 et 12, dans lequel les deuxièmes portions sont reliées aux quatrièmes portions de façon que la résistance entre chaque accumulateur de la deuxième rangée et l'accumulateur de même rang de la quatrième rangée soit identique à 10 % près.

## Patentansprüche

1. Eine Batterieanordnung (25; 70), die folgendes aufweist:
eine erste Vielzahl von Akkumulatoren (10), die in Reihen verteilt sind;
einen ersten Träger (14; 106) angeordnet entlang einer ersten Reihe der Akkumulatoren der ersten Vielzahl von Akkumulatoren;
erste leitende Streifen (20) angebracht an den Akkumulatoren der ersten Reihe und sich auf den ersten Träger erstreckend;
eine erste Führung (34), wobei der erste Träger in der Lage ist in der ersten Führung zu gleiten;
einen ersten Metallstreifen (46), der sich in der ersten Führung erstreckt;
**dadurch gekennzeichnet, dass** erste deformierbare elektrische Verbinder (48) an dem ersten Metallstreifen befestigt sind und fähig sind, in Kontakt mit den ersten leitenden Streifen zu kommen, wenn der erste Träger vollständig in die erste Führung eingesetzt ist; und
dass die ersten Metallteile (52; 84; 130) längs des ersten Metallstreifens verteilt sind und in Kontakt mit den ersten Metallstreifen sind.

2. Die Batterieanordnung nach Anspruch 1, wobei für jeden ersten leitenden Streifen (20) der elektrische Widerstand zwischen dem ersten leitenden Streifen und dem ersten am dichtesten gelegenen Metallteil (52; 84) im wesentlichen identisch ist.

3. Die Batterieanordnung nach Anspruch 2, wobei für jeden ersten leitenden Streifen (20) der elektrische Widerstand zwischen dem ersten leitenden Streifen und dem ersten am dichtesten gelegenen Metallteil (52; 84) identisch ist innerhalb 10 %.

4. Die Batterieanordnung nach einem der Ansprüche 1 bis 3, wobei die ersten deformierbaren elektrischen Verbinder (48) Mehrfachstreifen elektrischer Verbinder aufweisen.

5. Die Batterieanordnung nach einem der Ansprüche 1 bis 4, wobei die erste Führung (34) erste Öffnungen (54) aufweist, und zwar für den Durchgang der ersten Teile.

6. Die Batterieanordnung nach einem der Ansprüche 1 bis 5, wobei eine Platte (74; 82) vorgesehen ist, die durch die ersten Teile (84) fortgesetzt ist.

7. Die Batterieanordnung nach Anspruch 1, wobei ferner folgendes vorgesehen ist:
zweite leitende Streifen (20) befestigt an den Akkumulatoren einer zweiten Reihe der Akkumulatoren (10) der ersten Vielzahl von Akkumulatoren;
ein zweiter Metallstreifen (46; 126);
zweite deformierbare elektrische Verbinder (48; 128) angebracht an dem zweiten Metallstreifen und in der Lage in Kontakt zu kommen mit den zweiten leitenden Streifen.

8. Die Batterieanordnung nach Anspruch 7, wobei ferner folgendes vorgesehen ist:
ein zweiter Träger (14) angeordnet entlang der zweiten Reihe von Akkumulatoren (10), wobei die zweiten Verbindungsstreifen (20) sich auf dem zweiten Träger erstrecken;
eine zweite Führung (34), wobei der zweite Metallstreifen (46) sich in der zweiten Führung erstreckt, die zweiten deformierbaren elektrischen Verbinder (48) in der Lage sind in Kontakt zu kommen mit den zweiten leitenden Streifen, wenn der zweite leitende Träger vollständig in die zweite Führung eingesetzt ist; und
zweite Metallteile (52) verteilt entlang des zweiten Metallstreifens und in Verbindung mit dem zweiten Metallstreifen.

9. Die Batterieanordnung nach Anspruch 8, wobei der erste Träger (106) erste und zweite entgegengesetzt liegende Oberflächen (108, 110) aufweist, wobei die erste Reihe von Akkumulatoren auf der ersten Oberfläche (108) angeordnet ist und die zweite Reihe von Akkumulatoren auf der zweiten Oberfläche angeordnet ist, wobei die ersten leitenden Streifen (20) sich auf der ersten Oberfläche erstrecken und die zweiten leitenden Streifen (20) sich auf der zweiten Oberfläche erstrecken, wobei die zweiten Metallstreifen (126) sich in der ersten Führung (34) erstrecken und die zweiten deformierbaren elektrischen Verbinder (128) in der Lage sind in Kontakt zu kommen mit den zweiten leitenden Streifen, wenn der erste Träger vollständig in die erste Führung eingesetzt ist, wobei jeder erste Metallteil (130) eine erste Metallschicht (132) in Kontakt mit dem ersten Metallstreifen aufweist und eine zweite Metallschicht (134) in Kontakt mit dem zweiten Metallstreifen ist.

10. Die Batterieanordnung nach einem der Ansprüche 1 bis 9, wobei ferner folgendes vorgesehen ist:
eine zweite Vielzahl von Akkumulatoren verteilt in Reihen;
ein dritter Träger angeordnet entlang der dritten Reihe von Akkumulatoren der zweiten Vielzahl von Akkumulatoren;
dritte leitende Streifen angebracht an den Akkumulatoren der dritten Reihe und sich auf dem dritten Träger erstreckend;
eine dritte Führung, wobei der dritte Träger in der Lage ist auf der dritten Führung zu gleiten;
ein dritter Metallstreifen, der sich in der dritten Führung erstreckt;
dritte deformierbare elektrische Verbinder angebracht an dem dritten Metallstreifen und geeignet zum in Kontakt Kommen mit den dritten leitenden Streifen, wenn der dritte Träger vollständig in die dritte Führung eingesetzt ist; und
dritte Metallteile verteilt entlang des dritten Metallstreifens und in Kontakt mit dem dritten Metallstreifen.

11. Die Batterieanordnung nach Anspruch 10, wobei die ersten Metallteile mit den dritten Metallteilen verbunden sind, so dass der Widerstand zwischen jedem Akkumulator der ersten Reihe und dem Akkumulator des gleichen Rangs der dritten Reihe identisch innerhalb von 10 % ist.

12. Die Batterieanordnung nach den Ansprüchen 1 bis 11, wobei ferner folgendes vorgesehen ist:
ein vierter Träger angeordnet entlang der vierten Reihe der Akkumulatoren der zweiten Vielzahl von Akkumulatoren;
vier leitende Streifen angebracht an den Akkumulatoren der vierten Reihe und sich auf dem vierten Träger erstreckend;
eine vierte Führung, wobei der vierte Träger in der Lage ist in der vierte Führung zu gleiten;
ein vierter Metallstreifen, der sich in der vierten Führung erstreckt;
vierte deformierbare elektrische Verbinder, angebracht an dem vierten Metallstreifen und in der Lage in Kontakt zu kommen mit den vierten leitenden Streifen, wenn der vierte Träger vollständig in die vierte Führung eingesetzt ist; und
vierte Metallteile verteilt entlang des vierten Metallstreifens und in Kontakt mit dem vierten Metallstreifen.

13. Die Batterieanordnung nach Anspruch 11 und 12, wobei die zweiten Teile mit den vierten Teilen derart verbunden sind, dass der Widerstand zwischen jedem Akkumulator der zweiten Reihe und dem Akkumulator des gleichen Ranges der vierten Reihe identisch innerhalb von 10 % ist.

## Claims

1. A battery pack (25; 70) comprising:
a first plurality of accumulators (10) distributed in rows;
a first support (14; 106) arranged along a first row of accumulators of the first plurality of accumulators;
first conductive strips (20) attached to the accumulators of the first row and extending on the first support;
a first guide (34), the first support being capable of sliding in the first guide;
a first metal strip (46) extending in the first guide;
**characterized in that** first deformable electric connectors (48) are attached to the first metal strip and capable of coming into contact with the first conductive strips when the first support is fully inserted into the first guide; and
first metal portions (52; 84; 130) are distributed along the first metal strip and in contact with the first metal strip.

2. The battery pack of claim 1, wherein, for each first conductive strip (20), the electric resistance between the first conductive strip and the first closest metal portion (52; 84) is substantially identical.

3. The battery pack of claim 2, wherein, for each first conductive strip (20), the electric resistance between the first conductive strip and the first closest metal portion (52; 84) is identical to within 10%.

4. The battery pack of any of claims 1 to 3, wherein the first deformable electric connectors (48) comprise multiple-strip electric connectors.

5. The battery pack of any of claims 1 to 4, wherein the first guide (34) comprises first openings (54) for the passage of the first portions.

6. The battery pack of any of claims 1 to 5, comprising a plate (74; 82) continued by the first portions (84).

7. The battery pack of claim 1, further comprising:
second conductive strips (20) attached to the accumulators of a second row of accumulators (10) of the first plurality of accumulators;
a second metal strip (46; 126);
second deformable electric connectors (48; 128) attached to the second metal strip and capable of coming into contact with the second conductive strips.

8. The battery pack of claim 7, further comprising:
a second support (14) arranged along the second row of accumulators (10), the second conductive strips (20) extending on the second support;
a second guide (34), the second support being capable of sliding in the second guide, the second metal strip (46) extending in the second guide, the second deformable electric connectors (48) being capable of coming into contact with the second conductive strips when the second support is fully inserted into the second guide; and
second metal portions (52) distributed along the second metal strip and in contact with the second metal strip.

9. The battery pack of claim 8, wherein the first support (106) comprises first and second opposite surfaces (108, 110), the first row of accumulators being arranged on the first surface (108) and the second row of accumulators being arranged on the second surface, the first conductive strips (20) extending on the first surface and the second conductive strips (20) extending on the second surface, the second metal strip (126) extending in the first guide (34), the second deformable electric connectors (128) being capable of coming into contact with the second conductive strips when the first support is fully inserted into the first guide, each first metal portion (130) comprising a first metal layer (132) in contact with the first metal strip and a second metal layer (134) in contact with the second metal strip.

10. The battery pack of any of claims 1 to 9, further comprising:
a second plurality of accumulators distributed in rows;
a third support arranged along a third row of accumulators of the second plurality of accumulators;
third conductive strips attached to the accumulators of the third row and extending on the third support;
a third guide, the third support being capable of sliding in the third guide;
a third metal strip extending in the third guide;
third deformable electric connectors attached to the third metal strip and capable of coming into contact with the third conductive strips when the third support is fully inserted into the third guide; and
third metal portions distributed along the third metal strip and in contact with the third metal strip.

11. The battery pack of claim 10, wherein the first metal portions are connected to the third metal portions so that the resistance between each accumulator of the first row and the accumulator of same rank of the third row is identical to within 10%.

12. The battery pack of any of claims 1 to 11, further comprising:
a fourth support arranged along a fourth row of accumulators of the second plurality of accumulators;
fourth conductive strips attached to the accumulators of the fourth row and extending on the fourth support;
a fourth guide, the fourth support being capable of sliding in the fourth guide;
a fourth metal strip extending in the fourth guide;
fourth deformable electric connectors attached to the fourth metal strip and capable of coming into contact with the fourth conductive strips when the fourth support is fully inserted into the fourth guide; and
fourth metal portions distributed along the fourth metal strip and in contact with the fourth metal strip.

13. The battery pack of claims 11 and 12, wherein the second portions are connected to the fourth portions so that the resistance between each accumulator of the second row and the accumulator of same rank of the fourth row is identical to within 10%.
